# EUROPÄISCHE PATENTSCHRIFT

(11) **EP 1 031 662 B1**
(45) Veröffentlichungstag und Bekanntmachung des Hinweises auf die Patenterteilung: **28.05.2003**
(21) Anmeldenummer: 00103711.8
(22) Anmeldetag: 22.02.2000
(51) Int. Cl.: E02B 15/04, C02F 1/40

(54) **Abschöpfvorrichtung**
Skimmer
Dispositif pour enlever de la matière

(30) Priorität: 25.02.1999 DE 19908245
(43) Veröffentlichungstag der Anmeldung: 30.08.2000
(73) Patentinhaber: Faudi Filtersysteme GmbH, 35260 Stadtallendorf (DE)
(72) Erfinder: Ahrens, Hartmut, 36460 Staufenberg (DE); Neebe, Konrad, 35117 Münchausen (DE)
(74) Vertreter: Patentanwalts-Partnerschaft, Rotermund + Pfusch + Bernhard

(56) Entgegenhaltungen:
- DE-A- 3 600 788
- DE-U- 8 623 253
- US-A- 4 728 440
- PATENT ABSTRACTS OF JAPAN vol. 017, no. 413 (C-1092), 3. August 1993 (1993-08-03) & JP 05 084481 A (TRINITY IND CORP), 6. April 1993 (1993-04-06)

## Beschreibung

Die Erfindung betrifft eine Vorrichtung zum Abschöpfen von auf einer Flüssigkeit aufschwimmenden Fremdstoffen aus einem Behälter, mit den Merkmalen des Oberbegriffes des Anspruches 1.

Mit Hilfe einer derartigen, auch als "Skimmer" bezeichneten Abschöpfvorrichtung werden Fremdstoffe, wie z.B. Öle oder Schaum, die in einem Behälter auf einer Flüssigkeit aufschwimmen, von dieser Flüssigkeit entfernt, das heißt abgeschöpft. Zu diesem Zweck weist eine herkömmliche Abschöpfvorrichtung einen Einlaufstutzen auf, der an seiner Oberseite eine nach oben offene Einlauföffnung besitzt und der an seiner Unterseite an einen Schlauch angeschlossen ist. Zum Abschöpfen wird der Einlaufstutzen mit dem Schlauch in die Flüssigkeit eingetaucht, derart, daß die Einlauföffnung parallel zur Flüssigkeitsoberfläche im Bereich der Fremdstoffe mündet, z.B. innerhalb einer aufschwimmenden Ölschicht. Der Schlauch wird üblicherweise durch einen U-förmigen Bogen aus dem Behälter herausgeführt und ist an eine Pumpe angeschlossen, mit deren Hilfe die durch den Einlaufstutzen in den Schlauch eindringenden Fremdstoffe aus dem Behälter herausgefördert werden.

Um ein Abschöpfen der Fremdstoffe durchführen zu können, muß sich die Einlauföffnung des Einlaufstutzens mit einer Eintauchtiefe unterhalb eines sich im Behälter ausbildenden Flüssigkeitspegels positioniert werden. Bei bestimmten Anwendungsfällen muß diese Eintauchtiefe besonders genau eingehalten werden, um eine gleichmäßige Einlaufströmung der Fremdstoffe zum Einlaufstutzen hin ausbilden zu können. Ebenso kann es erforderlich sein, eine relativ kleine Eintauchtiefe einzustellen, um eine entsprechend dünne Schicht von Fremdstoffen, beispielsweise eine Fremdölschicht, von der Flüssigkeit abzuschöpfen. Dabei ist es für den Wirkungsgrad dieser Abschöpfvorrichtung von entscheidender Bedeutung, daß von der Flüssigkeit, von deren Oberseite die Fremdstoffe abgeschöpft werden sollen, ein möglichst geringer Anteil mit abgeschöpft wird.

Herkömmliche Abschöpfvorrichtungen, wie z.B. aus der US 5 326 458 bekannt, positionieren den Einlaufstutzen mit Hilfe eines auf der Flüssigkeit aufschwimenden Schwimmers, an dem der Einlaufstutzen befestigt ist und sich somit automatisch mit dem Flüssigkeitspegel im Behälter verstellt. Bei diesen herkömmlichen Abschöpfvorrichtungen hängt jedoch die Eintauchtiefe des Einlaufstutzens bzw. der Einlauföffnung vom Abschöpfvolumenstrom und vom Flüssigkeitspegel im Behälter ab. Denn durch die in den Schlauch eindringende Abschöpfmenge ändert sich die Gesamtmasse der vom Schwimmer positionierten Anordnung aus Einlaufstutzen mit daran befestigtem Schlauch. Außerdem ist der vom Schwimmer zu tragende Schlauchabschnitt um so größer, je höher der Flüssigkeitspegel im Behälter ist. Darüber hinaus hängt die im Schlauch enthaltene Abschöpfmenge von der momentanen Förderleistung der Pumpe ab, so daß auch diesbezüglich Schwankungen der vom Schwimmer zu tragenden Masse auftreten können. Bei einer herkömmlichen Abschöpfvorrichtung bestehen somit Schwierigkeiten bei der Einstellung einer relativ kleinen Eintauchtiefe bzw. bei der Einhaltung einer bestimmten Eintauchtiefe für den Einlaufstutzen.

Aus der DE 86 23 253 U1 ist eine Abschöpfvorrichtung bekannt, bei der ein Einlauftrichter, ein daran angeschlossenes Saugrohr sowie eine damit verbundene Tauchpumpe eine Einheit bilden, die mit Hilfe einer Verstelleinrichtung im Behälter senkrecht zum Flüssigkeitspegel verstellbar ist. In der Behälterwand sind außerdem Sensoren angeordnet, mit denen der Flüssigkeitspegel bestimmt werden kann. Die Verstelleinrichtung kann dann in Abhängigkeit des Flüssigkeitspegels betätigt werden, um die Einheit aus Trichter, Saugrohr und Pumpe dementsprechend im Behälter zu positionieren.

Aus der JP 5-84 481 A (JP Patents Abstracts of Japan, C-1092 August 3, 1993, Vol. 17/No. 413) ist eine Abschöpfvorrichtung der eingangs genannten Art bekannt, deren Einlaufstutzen oben eine nach oben offene Einlauföffnung aufweist und an den unten eine Leitung angeschlossen ist. Eine Verstelleinrichtung ermöglicht eine Verstellung des Einlaufstutzens senkrecht zu einem Flüssigkeitspegel. Die bekannte Abschöpfvorrichtung besitzt einen Schallsensor, mit dem der Flüssigkeitspegel abgetastet werden kann. Die Verstelleinrichtung wird in Abhängigkeit der Sensorsignale betätigt, um den Einlaufstutzen relativ zum Flüssigkeitspegel in der gewünschten Weise zu positionieren.

Bei den beiden letztgenannten bekannten Abschöpfvorrichtungen kann der Einlaufstutzen mit Hilfe einer vom im Behälter vorliegenden Flüssigkeitspegel unabhängigen Verstelleinrichtung positioniert werden, wobei die Positionierung des Einlaufstutzen zur Einstellung einer bestimmten Eintauchtiefe mit Hilfe einer den Flüssigkeitspegel detektierenden Sensorik durchgeführt wird. Zur Koordination der Sensorik und der Verstelleinrichtung kann eine Steuerung verwendet werden, welche die von der Sensorik erzeugten Signalwerte auswertet und in Abhängigkeit davon die Verstelleinrichtung so betätigt, daß diese für den Einlaufstutzen eine vorgebbare Eintauchtiefe einstellt. Durch diese Ausgestaltung der Abschöpfvorrichtung kann eine grundsätzlich beliebig kleine Eintauchtiefe für den Einlaufstutzen bzw. für dessen Einlauföffnung eingestellt und aufrechterhalten werden. Sich ändernde Randbedingungen, wie die Abschöpfmenge, die im Schlauch vorhandene abgeschöpfte Fremdstoffmasse, die Belastung des Einlaufstutzens durch den Schlauch, die Förderleistung der Pumpe, bleiben jeweils ohne Einfluß auf die Position des Einlaufstutzens.

Aus der EP 0 219 164 A1 ist eine Abschöpfvorrichtung bekannt, deren Einlaufstutzen mit Hilfe einer Verstelleinrichtung senkrecht zum Flüssigkeitspegel im Behälter verstellbar ist. Mit Hilfe eines Sensors wird dort der Flüssigkeitspegel im Einlaufstutzen überwacht. In Abhängigkeit des Flüssigkeitspegels im Einlaufstutzen wird dann die Verstelleinrichtung betätigt, um den Einlaufstutzen innerhalb des Behälters zu positionieren. Die Einstellung einer kleinen Eintauchtiefe ist bei einer derartigen Ausführungsform relativ aufwendig, da die Eintauchtiefe hier von der momentanen Förderleistung der Pumpe abhängt.

Des weiteren handelt es sich bei den aufgezeigten bekannten Abschöpfvorrichtungen jeweils um Anlagen, die am zugehörigen Behälter fest installiert sind. Das Abschöpfen einer aufschwimmenden Verschmutzung bei verschiedenen Behältern, erfordert somit einen relativ großen Aufwand.

Die vorliegende Erfindung beschäftigt sich mit dem Problem, eine Abschöpfvorrichtung der eingangs genannten Art dahingehend auszugestalten, daß sich die Verwendung und Anwendung der Abschöpfvorrichtung vereinfacht.

Dieses Problem wird erfindungsgemäß durch eine Abschöpfvorrichtung mit den Merkmalen des Anspruchs 1 gelöst. Hierbei wird durch die Anbringung der Pumpe und der Verstelleinrichtung an der Basisplatte sowie durch die direkte oder indirekte Halterung der Sensorik an der Basisplatte eine Einheit gebildet, die komplett und auf einfache Weise transportiert, montiert und demontiert werden kann. Die Verwendung und Anwendung der erfindungsgemäßen Abschöpfvorrichtung zum Abschöpfen von aufschwimmenden Verunreinigungen bei verschiedenen Behältern wird dadurch stark vereinfacht.

Entsprechend einer bevorzugten Ausführungsform der erfindungsgemäßen Abschöpfvorrichtung kann die Verstelleinrichtung eine Stange aufweisen, an deren einen axialen Ende der Einlaufstutzen befestigt ist, wobei die Stange mit Antriebsmitteln senkrecht zum Flüssigkeitspegel verstellbar ist. Durch diese Maßnahmen wird ein besonders einfach herstellbarer Aufbau angegeben, mit dem eine relativ exakte Positionierbarkeit für den Einlaufstutzen gewährleistet werden kann.

Bei einer vorteilhaften Ausführungsform der Abschöpfvorrichtung nach der Erfindung kann die Sensorik einen Sensor aufweisen, der bezüglich des Einlaufstutzens ortsfest montiert ist, wobei dann dieser Sensor zusammen mit dem Einlaufstutzen durch die Verstelleinrichtung senkrecht zum Flüssigkeitspegel verstellbar ist. Bei einer solchen Ausführungsform kann die Positionierung des Einlaufstutzens besonders genau durchgeführt werden, insbesondere ist dadurch eine Regelung der Einlaufstutzenposition möglich, da die Position des Einlaufstutzens mit der Position des Sensors gekoppelt ist, wodurch eine Abweichung einer für den Einlaufstutzen eingestellten Ist-Position von einer von der Steuerung geforderten Soll-Position durch die dann ebenfalls abweichende Position des Sensors erfaßbar und somit korrigierbar ist. Beispielsweise kann der Sensor derart ausgestaltet sein, daß er beim Kontakt mit der Flüssigkeit ein entsprechendes Signal erzeugt, wobei der Einlaufstutzen relativ zum Sensor dann so positioniert ist, daß der Einlaufstutzen beim Kontakt des Sensors mit der Flüssigkeit die gewünschte Eintauchtiefe aufweist.

Weitere wichtige Merkmale und Vorteile der erfindungsgemäßen Abschöpfvorrichtung ergeben sich aus den Unteransprüchen, aus der Zeichnung und aus der zugehörigen Figurenbeschreibung anhand der Zeichnung. Ein bevorzugtes Ausführungsbeispiel der Erfindung ist in der Zeichnung dargestellt und wird in der nachfolgenden Beschreibung näher erläutert.

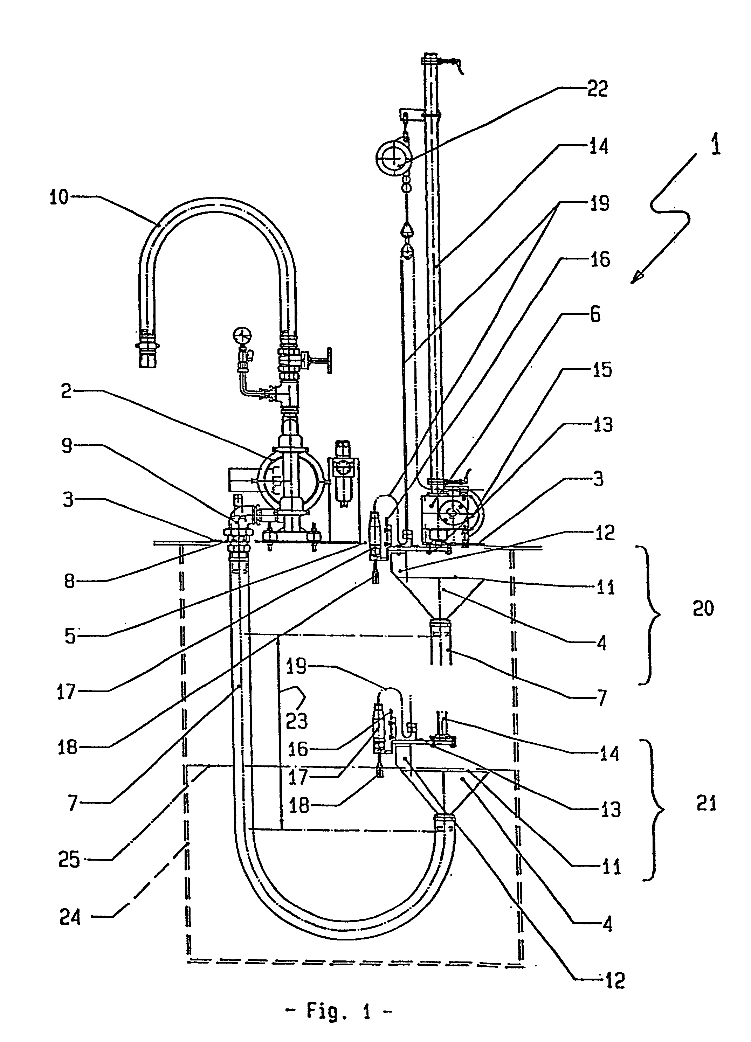

Die einzige Fig. 1 zeigt eine schematische Seitenansicht auf eine erfindungsgemäße Abschöpfvorrichtung.

Entsprechend Fig. 1 weist eine Abschöpfvorrichtung 1 nach der Erfindung eine Basisplatte 3 auf, die so ausgestaltet ist, daß sie einfach an einem mit unterbrochenen Linien dargestellten Behälter 24 ortsfest anbringbar ist. Beispielsweise kann die Basisplatte 3 so ausgebildet sein, daß sie an einem Rand des Behälters 24 einhängbar oder darauf auflegbar ist. Auf dieser Basisplatte 3 ist eine Pumpe 2, insbesondere eine selbstansaugende Membranpumpe, befestigt, die saugseitig an einen Schlauch 7 angeschlossen ist. Dieser Anschluß wird dabei durch ein abgewinkeltes Rohrstück 9 gebildet, wobei in der Basisplatte 3 eine Öffnung 8 ausgespart ist, durch die das Rohrstück 9 hindurchdringt. Die Pumpe 2 ist druckseitig an eine Abführungsleitung 10 angeschlossen, die durch einen Schlauch oder ein Rohr gebildet sein kann.

Der Schlauch 7 weist gemäß Fig. 1 unterhalb der Basisplatte 3 und innerhalb des Behälters 24 einen U-förmigen Verlauf auf und ist einenends an das Rohrstück 9 und anderenends an ein unteres Ende eines Einlaufstutzens 4 angeschlossen. Dieser Einlaufstutzen 4 weist an seinem oberen Ende eine nach oben offene Einlauföffnung 11 auf und ist über ein Stegelement 12 an einer plattenförmigen Halterung 13 befestigt. Der Einlaufstutzen 4 ist hier trichterförmig ausgebildet.

An der Halterung 13 greift eine Stange 14 an, die Teil einer an der Basisplatte 3 befestigten Verstelleinrichtung 6 ist. Die Stange 4 kann dabei als Gewindestange, Zahnstange oder als Spindel ausgebildet sein und wird durch Antriebsmittel 15 vertikal angetrieben bzw. verstellt. Die Antriebsmittel 15 können vorzugsweise einen Drehstrommotor sowie ein entsprechendes Getriebe aufweisen. Somit kann der Einlaufstutzen 4 mit Hilfe der Verstelleinrichtung 6 relativ zur Basisplatte 3 bidirektional entlang einer Vertikalen und senkrecht zu einem strichpunktiert dargestellten Flüssigkeitspegel 25 im Behälter 24 verstellt werden.

An der Halterung 13 ist außerdem über ein Winkelstück 16 ein Sensor 17 befestigt. In dem dargestellten bevorzugten Ausführungsbeispiel sensiert dieser Sensor 17 mit einem Kontaktelement 18 einen Kontakt mit dem Flüssigkeitspegel 25. Der Sensor 17 generiert entsprechende Signalwerte und sendet diese über eine Leitung 19 an die Verstelleinrichtung 6, wo sie von einer Steuerung verarbeitet werden. Diese Steuerung kann ebenso im Sensor 17 oder in einem separaten Steuergerät untergebracht sein.

Bei einer besonders einfachen Ausführungsform ist die Steuerung vorzugsweise so aufgebaut, daß der Einlaufstutzen 4 von der Verstelleinrichtung 6 solange nach unten verstellt wird, bis der Sensor 17 einen Kontakt mit dem Flüssigkeitspegel sensiert, z.B. bei einem Kontakt oder Eintauchen des Kontaktelementes 18 in die Flüssigkeit. Sobald dies der Fall ist, weist die Einlauföffnung 11 automatisch eine vorbestimmte Eintauchtiefe in die Flüssigkeit auf, so daß die gewünschte Abschöpfung von auf dieser Flüssigkeit aufschwimmenden Fremdstoffen, insbesondere Fremdflüssigkeiten, durchführbar ist. Dabei treten die aufschwimmenden Fremdstoffe durch die Einlauföffnung 11 in den Einlaufstutzen 4 ein, gelangen dadurch in den Schlauch 7, von wo aus sie durch die Pumpe 2 weitertransportiert und über die Abführungsleitung 10 beispielsweise in einen entsprechenden Entsorgungsbehälter weitergefördert werden.

In Fig. 1 sind für den Einlaufstutzen 4 und den Sensor 17 zwei Hubstellungen wiedergegeben, wobei die obere Hubstellung mit einer geschweiften Klammer 20 und die untere Hubstellung mit einer geschweiften Klammer 21 gekennzeichnet sind. Um dieser Hubverstellung folgen zu können, ist der Schlauch 7 aus einem entsprechend nachgiebigen flexiblen Material hergestellt. Durch einen Doppelpfeil 23 ist der vom Einlaufstutzen 4 durchführbare Hub gekennzeichnet.

Damit der Einlaufstutzen 4 in seiner oberen Hubstellung 20 möglichst nahe an die Basisplatte 3 heran verstellt werden kann, weist die Basisplatte 3 eine Öffnung 5 auf, durch die der Sensor 17 hindurchdringen kann. Gleichzeitig erfolgt durch diese Öffnung 5 hindurch die Führung der Leitung 19.

Im Bereich eines vom Einlaufstutzen 4 abgewandten Abschnittes der Stange 14 ist eine Spanneinrichtung 22 angebracht, mit deren Hilfe die Leitung 19 stets unter einer gewissen Vorspannung gehalten ist.

Die Steuerung kann permanent oder mit einer bestimmten Frequenz, z.B. 0,1Hz, den Flüssigkeitspegel 25 überprüfen und eine entsprechende Verstellung des Einlaufstutzens 4 veranlassen.

Bei einer anderen Ausführungsform kann der Sensor 17 so ausgebildet sein, daß er beispielsweise die Eindringtiefe seines Kontaktelementes 18 in die Flüssigkeit detektiert und ein damit korreliertes Signal generiert. Bei einer derartigen Ausführungsform kann die jeweils gewünschte Eintauchtiefe der Einlaßöffnung 11 auf einfache Weise elektrisch bzw. elektronisch vorbestimmt werden. Insbesondere kann bei einer solchen Ausführungsform eine Regelung ausgebildet werden, indem der Eindringtiefe des Kontaktelementes 18 eine Ist-Position für den Einlaufstutzen 4 zugeordnet wird, wobei die durch Voreinstellung gewünschte Eintauchtiefe die Soll-Position für den Einlaufstutzen 4 darstellt. Ein Vergleich der Soll- und Ist-Werte ermöglicht dann eine Regulierung der Position des Einlaufstutzens 4, so daß eine gewünschte Eintauchtiefe relativ exakt eingehalten werden kann.

Für den Fall, daß lediglich eine auf der Flüssigkeit aufschwimmende Fremdflüssigkeit ohne Schaum abgeschöpft werden soll, kann der Sensor 17 auch ortsfest an der Basisplatte 3 befestigt sein und den jeweiligen Flüssigkeitspegel durch eine Entfernungsmessung, beispielsweise mittels Ultraschall oder Infrarotstrahlung detektieren. Die erfindungsgemäße Abschöpfvorrichtung kann grundsätzlich mit einer beliebigen Sensorik ausgestattet sein, die auch mehrere Sensoren umfassen kann.

Bei einer weiteren Ausführungsform ist der an der Halterung 13 angebrachte Sensor 17 so ausgebildet, daß neben dem Flüssigkeitspegel zusätzlich die Konsistenz der Flüssigkeit überwachbar ist, derart, daß die Signalwerte des Sensors eine Entscheidung darüber ermöglichen, ob eine Abschöpfung von Fremdstoffen, vorzugsweise von einer Fremdflüssigkeit, erforderlich ist oder nicht, und/oder eine Auswahl der geeigneten Eintauchtiefe ermöglichen.

## Patentansprüche

1. Vorrichtung zum Abschöpfen von auf einer Flüssigkeit aufschwimmenden Fremdstoffen aus einem Behälter (24),
wobei ein Einlaufstutzen (4) vorgesehen ist, der oben eine nach oben offene Einlauföffnung (11) aufweist und an den unten ein flexibler Schlauch (7) angeschlossen ist,
wobei eine Pumpe (2) vorgesehen ist, die an den Schlauch (7) angeschlossen ist und die durch den Einlaufstutzen (4) in den Schlauch (7) eindringende Fremdstoffe aus dem Behälter (24) herausfördert,
wobei eine Verstelleinrichtung (6) vorgesehen ist, mit deren Hilfe der Einlaufstutzen (4) senkrecht zu einem Flüssigkeitspegel (25) verstellbar ist,
wobei eine Sensorik (17) vorgesehen ist, mit deren Hilfe der Flüssigkeitspegel (25) im Behälter (24) detektierbar ist,
wobei eine Steuerung vorgesehen ist, die die Verstelleinrichtung (6) so betätigt, daß sich die Einlauföffnung (11) um eine vorbestimmbare Eintauchtiefe unterhalb des Flüssigkeitspegels (25) befindet,
**dadurch gekennzeichnet,**
**daß** eine Basisplatte (3) vorgesehen ist, an der die Pumpe (2) und die Verstelleinrichtung (6) befestigt sind und die so ausgebildet ist, daß sie oberhalb des Flüssigkeitspegels (25) ortsfest am Behälter (24) anbringbar ist,
**daß** die Sensorik (17) direkt oder indirekt an der Basisplatte (3) gehaltert ist.

2. Abschöpfvorrichtung nach Anspruch 1,
**dadurch gekennzeichnet, daß** die Verstelleinrichtung (6) eine Stange (14) aufweist, an deren einen axialen Ende der Einlaufstutzen (4) befestigt ist, wobei die Stange (14) mit Antriebsmitteln (15) senkrecht zum Flüssigkeitspegel (25) verstellbar ist.

3. Abschöpfvorrichtung nach Anspruch 1 oder 2,
**dadurch gekennzeichnet, daß** die Sensorik einen Sensor (17) aufweist, der bezüglich des Einlaufstutzens (4) ortsfest montiert ist und mit diesem durch die Verstelleinrichtung (6) senkrecht zum Flüssigkeitspegel verstellbar ist.

4. Abschöpfvorrichtung nach Anspruch 1 oder 2,
**dadurch gekennzeichnet, daß** die Sensorik einen Sensor aufweist, der bezüglich des Behälters (24) ortsfest montiert ist.

5. Abschöpfvorrichtung nach einem der Ansprüche 1 bis 4,
**dadurch gekennzeichnet, daß** die Sensorik einen Sensor aufweist, der nach Art eines Entfernungsmessers arbeitet.

6. Abschöpfvorrichtung nach einem der Ansprüche 1 bis 4,
**dadurch gekennzeichnet, daß** die Sensorik einen Sensor (17) aufweist, der einen Kontakt mit der Flüssigkeit sensiert.

7. Abschöpfvorrichtung nach einem der Ansprüche 1 bis 6,
**dadurch gekennzeichnet, daß** die Sensorik einen Sensor (17) aufweist, der es ermöglicht, eine Schichtdicke einer auf der Flüssigkeit aufschwimmenden Fremdstoffschicht zu ermitteln, wobei die Steuerung in Abhängigkeit dieser Schichtdicke die Abschöpfung betätigt und/oder die Eintauchtiefe der Einlaßöffnung (11) auswählt.

8. Abschöpfvorrichtung nach einem der vorhergehenden Ansprüche,
**dadurch gekennzeichnet, daß** der Fremdstoff durch eine leichtere, aufschwimmende Fremdflüssigkeit gebildet ist, wobei der durch die Sensorik detektierte Flüssigkeitspegel (25) durch die Oberfläche der Fremdflüssigkeit definiert ist.

9. Abschöpfvorrichtung nach einem der vorhergehenden Ansprüche,
**dadurch gekennzeichnet,**
**daß** die Steuerung kontinuierlich oder getaktet den Flüssigkeitspegel (25) ermittelt und die Verstelleinrichtung (6) betätigt.

## Claims

1. A device for skimming foreign materials, which are floating on a liquid, from a receptacle (24),
an inlet connection (4) being provided, which has an inlet opening (11) on top which is open on top and to which a flexible hose (7) is attached on the bottom,
a pump (2) being provided, which is attached to the hose (7) and which removes the foreign material entering the hose (7) through the inlet connection (4) from the receptacle (24),
an adjustment device (6) being provided, with the aid of which the inlet connection (4) is adjustable perpendicularly to a liquid level (25),
a sensor system (17) being provided, with the aid of which the liquid level (25) in the container (24) is detectable,
a controller being provided, which actuates the adjustment device (6) in such a way that the inlet opening (11) is located around a predetermined immersion depth below the liquid level (25),
**characterized in that**
a base plate (3) is provided, to which the pump (2) and the adjustment device (6) are attached and which is implemented in such a way that it may be fixed on the receptacle (24) above the liquid level (25),
and that the sensor system (17) is fixed directly or indirectly onto the base plate (3).

2. The skimmer according to Claim 1,
**characterized in that**
the adjustment device (6) has a rod (14), onto one axial end of which the inlet connection (4) is attached, the rod (14) being adjustable perpendicularly to the liquid level (25) using drive means (15).

3. The skimmer according to Claim 1 or 2,
**characterized in that**
the sensor system has a sensor (17) which is mounted fixed in relation to the inlet connection (4) and is adjustable perpendicularly to the liquid level, with the connection, by the adjustment device (6).

4. The skimmer according to Claim 1 or 2,
**characterized in that**
the sensor system has a sensor which is mounted fixed in relation to the receptacle (24).

5. The skimmer according to one of Claims 1 to 4,
**characterized in that**
the sensor system has a sensor which operates like a rangefinder.

6. The skimmer according to one of Claims 1 to 4,
**characterized in that**
the sensor system has a sensor (17) which senses contact with the liquid.

7. The skimmer according to one of Claims 1 to 6,
**characterized in that**
the sensor system has a sensor (17) which allows it to determine a layer thickness of a foreign material layer floating on the liquid, the controller actuating the skimming and/or selecting the immersion depth of the inlet opening (11) as a function of this layer thickness.

8. The skimmer according to one of the preceding claims,
**characterized in that**
the foreign material is formed by a lighter, floating foreign liquid, the liquid level (25) detected by the sensor system being defined by the surface of the foreign liquid.

9. The skimmer according to one of the preceding claims,
**characterized in that**
the controller determines the liquid level (25) and actuates the adjustment device (6) continuously or in a clocked way.

## Revendications

1. Dispositif pour prélever d'un réservoir (24) des impuretés flottant sur un liquide, une tubulure d'admission (4) étant prévue, qui présente en partie haute une ouverture d'admission (11) ouverte vers le haut et à laquelle est raccordé en partie basse un tuyau flexible (7), une pompe (2) étant prévue, qui est raccordée au tuyau flexible (7) et évacue du réservoir (24) des impuretés pénétrant par la tubulure d'admission (4) dans le tuyau (7), un dispositif de déplacement (6) étant prévu, à l'aide duquel la tubulure d'admission (4) peut être déplacée perpendiculairement à un niveau de liquide (25), un système de détection (17) étant prévu, à l'aide duquel le niveau de liquide (25) peut être détecté dans le réservoir (24), une commande étant prévue, qui actionne le dispositif de déplacement (6) de sorte que l'ouverture d'admission (11) se situe d'une profondeur d'immersion prédéfinissable au-dessous du niveau de liquide (25), **caractérisé en ce qu'**il est prévu une plaque de base (3), sur laquelle sont fixés la pompe (2) et le dispositif de déplacement (6) et qui est réalisée de sorte qu'elle peut être montée de façon stationnaire sur le réservoir (24) au-dessus du niveau de liquide (25), et **en ce que** le système de détection (17) est fixé directement ou indirectement sur la plaque de base (3).

2. Dispositif de prélèvement suivant la revendication 1, **caractérisé en ce que** le dispositif de déplacement (6) présente une barre (14), sur une extrémité axiale de laquelle est fixée la tubulure d'admission (4), la barre (14) pouvant être déplacée par des moyens d'entraînement (15) perpendiculairement au niveau de liquide (25).

3. Dispositif de prélèvement suivant l'une des revendications 1 et 2, **caractérisé en ce que** le système de détection présente un capteur (17), qui est monté de façon stationnaire par rapport à la tubulure d'admission (4) et peut être déplacé avec cette dernière par le dispositif de déplacement (6) perpendiculairement au niveau de liquide.

4. Dispositif de prélèvement suivant l'une des revendications 1 et 2, **caractérisé en ce que** le système de détection présente un capteur, qui est monté de façon stationnaire par rapport au réservoir (24).

5. Dispositif de prélèvement suivant l'une des revendications 1 à 4, **caractérisé en ce que** le système de détection présente un capteur, qui fonctionne à la manière d'un télémètre.

6. Dispositif de prélèvement suivant l'une des revendications 1 à 4, **caractérisé en ce que** le système de détection présente un capteur (17), qui détecte un contact avec le liquide.

7. Dispositif de prélèvement suivant l'une des revendications 1 à 6, **caractérisé en ce que** le système de détection présente un capteur (17), qui permet de déterminer une épaisseur d'une couche d'impuretés flottant sur le liquide, la commande commandant le prélèvement en fonction de cette épaisseur de couche et/ou sélectionnant la profondeur d'immersion de l'ouverture d'admission (11).

8. Dispositif de prélèvement suivant l'une des revendications précédentes, **caractérisé en ce que** l'impureté est formée par un liquide polluant en suspension, relativement léger, le niveau de liquide (25) détecté par le système de détection étant défini par la surface du liquide polluant.

9. Dispositif de prélèvement suivant l'une des revendications précédentes, **caractérisé en ce que** la commande détermine le niveau de liquide (25) et actionne le dispositif de déplacement (6) en continu ou en cadence.
